# EUROPEAN PATENT APPLICATION

(11) **EP 3 202 702 A1**
(43) Date of publication of application: **09.08.2017**
(21) Application number: 16153847.5
(22) Date of filing: 02.02.2016
(51) Int. Cl.: B66D 1/28, F16H 55/36

(54) **METHOD FOR BENDING A TENSION ELEMENT OVER A PULLEY**

(71) Applicant: DSM IP Assets B.V., 6411 TE Heerlen (NL)
(72) Inventor: BOSMAN, Rigobert, 6100 AA ECHT (NL); SCHNEIDERS, Hans, 6100 AA ECHT (NL); BECKERS, Stefan, 6100 AA ECHT (NL)

(57) **Abstract**

Method of bending a rope or cable over a pulley, comprising a step of decreasing the temperature of the pulley by using a closed cooling system that is in contact with the pulley.

## Description

The present invention relates to a method for bending a tension element over a pulley. The present invention also relates to a tension element obtainable by said method. The present invention also relates to the use of the tension element in different applications.

Such method for bending of a tension element over a pulley is already known in the art. In particular, a rope for bend-over-sheave applications is generally known in the art as a load-bearing rope typically used in lifting or installation applications, e.g. marine, oceanographic, offshore oil and gas, seismic, commercial fishing and other industrial markets. The lifting systems known in the art generally include a pulley, e.g. a sheave, a cooling system and a tensile element, e.g. a rope and protection system for said tension element, e.g. a cover that prevents the element from overheating during use. The cooling systems known in the art are open cooling systems, i.e. include direct and actively applying a cooling media, e.g. spraying water, e.g. from the sea, blowing (cooled) air and/or applying ice packs on the tension element and/or on the pulley and/or cooling of the tension element merely by directly exposing the tension element to the ambient environmental conditions, e.g. in air at about 15-25°C. For instance, JP69020221 B discloses a cable from a drum that has a rubber sheath provided thereon by an extruder and the sheath is vulcanized as the cable passes through a pipe by steam. Before the cable passes over a turn sheave to a cooling conduit, the cable is subjected to a pre-cooling water spray in section.

However, the drawback of the methods for bending of a tension element as known in the art is that when using the tension element particularly in applications that involve frequently pulling and bending the tension element over a pulley, this will result in internal/external friction and sub element movement resulting further in wear and energy dissipating processes of the tension element. When exposed to such frequent bending or flexing, the tension element will fail due to damage resulting from external and/or internal abrasion, frictional heat, such fatigue failure being often referred to as bending fatigue or flex fatigue. Consequently, the tension element that is bent according to methods of prior art have limited service life when exposed to frequent bending or flexing.

Accordingly, there is a need in the industry for a tension element that shows improved performance when used in bending applications during prolonged times.

The objective of the present invention is therefore to provide a tension element that shows improved performance, in particular increased life time when used in bending applications during prolonged times.

This objective was achieved with a method of bending a tension element over a pulley, the method comprising a step of decreasing the temperature of the pulley by using a closed cooling system that is in contact with the pulley.

It was surprisingly found that by applying the method according to the present invention, a tension element with improved performance when used in bending applications during prolonged times was achieved. In particular, a tension element with increased life time when subjected to bending under high load and high frequency cycles of bending during prolonged times was achieved.

Additional advantages of the method according to the present invention include using of a clean, non-corrosive, environmentally friendly and liquid-free environment, enabling for instance the possibility of using various cooling media for cooling also e.g. at temperatures below 0°C and allowing recirculation of cooling media. Furthermore, it was found that the temperature difference between the pulley and the tension element could be measured precisely and with constant values, enabling making estimations and predictions of the temperature, particularly of the core temperature of the tension element based on the temperature of the pulley, and thus allowing measuring of the temperature of the tension element in a more accurate and easier manner.

A "tension element" according to the present invention is an elongated body having a length much larger than its lateral dimensions of, for example, width and thickness or diameter, that may have circular or non-circular cross-section, and that may deform minimally under tension forces but may deform considerably under bending, wherein bending includes herein deflection. The value of the tension stiffness divided by the bending stiffness of the tension element may be high. "Tension forces" are defined herein as at least two forces acting on the tension element, along the same axis, oriented in opposite directions, away from one another, to stretch the tension element. "Bending" may be defined herein as the effect on a tension element of several forces that do not act along the same axis of the element, such forces causing a deflection force transversal to the axis of the tension element. For instance, this may be observed on the pulley as a transversal pressure, expressed in N/mm². Typically, tension tends to elongate a tension element, and bending tends to change the curvature and the cross-sectional shape of a tension element under a certain angle. "Bending" may also be defined herein as deflecting a tension element by means of a pulley. "Deflection" can be also referred to herein as the degree, e.g. an angle or a distance to which the tension element is displaced under a load. A bending cycle of a part of the tension element is defined herein as that part of the tension element going from straight shape to a bend or curved shape and going back into the straight shape. A tension element includes herein a strip, a strap, a belt, a cord, a ribbon, a cable, a wire, a rope, a strand, a tube, a hose, a wire rope, a tape, a chain and/or combinations thereof. Preferably, said length dimension of the tension element is at least 10 times, more preferably at least 20 times even more preferably at least 50 times and most preferably at least 100 times greater than the width or thickness dimension of the tension element, whichever is larger. The cross-sectional shape of the tension element may be from round or almost round, oblong or rectangular shape whereby a tension element with a round or almost round cross-section may be but is not limited to strands, cables, cords ropes, hoses or tubes, while tension elements with oblong to rectangular cross-sections are commonly referred to as ribbons or strips. The breaking strength of the tension element may be of from 0.001 kN to 30000 kN as measured by any method known in the art, preferably between 10 kN and 20000 kN as measured using the method ISO2307.

By "pulley" is meant herein a curved surface that is used for deflecting a force by means of a tension element passing over its edge, which may be a positive or negative grooved or a flat rim. Typically, a groove is flat when the edges of the groove have same diameter as rest of the groove. A groove may be positive grooved when the edges have a higher diameter as the rest of the groove and negative grooved when the edges have a lower diameter compared to the rest of the groove. A negative groove is especially used for belt applications. The groove can have different shapes, e.g. circular shaped, elliptical shaped, V shaped and/or combinations thereof. The groove may be also referred to herein as the "cavity". The term "pulley" includes herein wheels, sheaves, gliding shoes, bitts, drums, e.g. a spool or reel around which such a tension element can be wound. The pulley can be a dynamic device, i.e. there is no or hardly velocity difference between the surface of the tension element and the pulley

(e.g. traction winch, rotating sheave). The pulley can be also a static device, i.e. there is a velocity difference between surface of the tension element and the pulley (e.g. gliding shoe). In both cases, heat is typically generated, i.e. for the dynamic pulley device (e.g. when a sheave is rotating), most of the heat is generated internally in the tension element, and for the static pulley device, most of the heat is generated at the surface of the tension element. Velocity is typically known as the distance divided by the unit of time.

By "fiber" is herein understood an elongated body having a length, a weight, width and a thickness, with the length dimension of said body being much greater than the transverse dimensions of width and thickness. Accordingly, the term fiber includes filament, strip, band, tape, and the like, which may have regular or irregular cross-sections. The fibers may have continuous lengths, known in the art as filaments, or discontinuous lengths, known in the art as staple fibers. The fibers may have various cross-sections, e.g. regular or irregular cross-sections with a circular, bean-shape, oval or rectangular shape and they can be twisted or non-twisted.

By "yarn" is herein understood an elongated body containing a plurality of fibers or filaments, i.e. at least two individual fibers or filaments. By individual fiber or filament is herein understood the fiber or filament as such. The term "yarn" includes continuous filament yarns or filament yarns which contain a plurality of continuous filament fibers and staple yarns or spun yarns containing short fibers also called staple fibers. Such yarns are known to the skilled person in the art. The yarns may be subsequently grouped or bundled into strands, as known to the skilled person in the art.

By "rope" is meant herein an elongated body having a length much larger than its lateral dimensions of for example width and thickness or diameter. The rope may have a cross-section which is rounded or polygonal or combination thereof. Preferably, ropes having an oblong cross-section or a circular cross-section are used in the present invention. By diameter of the rope is herein understood the largest distance between two opposite locations on the periphery of a cross-section of the rope. The diameter of the rope used in accordance with the invention can vary between large limits, of less than 1 mm, to diameters specific of more than 200 mm and even more than 500 mm. The rope diameter can easily be determined by a skilled person.

Preferably, the tension element used in accordance with the invention comprises a material selected from a group comprising or consisting of a natural material, a metallic material, a synthetic material and/or combinations thereof. Any natural, synthetic and metallic material known to the skilled person in the art can be used in the tension element. Natural materials may include materials comprising or consisting of cotton, hemp, abaca, silk, bamboo, coir, flax (linen), jute, kapok, kenaf, pina, raffia, ramie, sisal, wood, and/or combinations thereof. Natural materials may also include materials with animal origins, such as alpaca, angora, byssus, camel hair, cashmere, catgut, silk, wool, yak and the like. Metallic materials may include materials comprising or consisting of steel, copper, and/or combinations thereof. Synthetic materials may include materials comprising or consisting of cellulose, e.g. acetate, triacetate, rayon, and polymeric materials, i.e. any polymers and/or polymer-based compositions as already known to the skilled person in the art. Suitable examples of polymers include polyolefins, polyesters, polyamides, (poly)aramids, polyarylates. The tension element used in accordance with the invention may comprise a material that may be in any form known in the art, e.g. powder, fibers.

Preferably, the tension element comprises or consists of a material in the form of fibers. In other words, the tension element used in accordance with the invention comprises or consists of fibers. The fibers may be selected from a group comprising or consisting of natural fibers, i.e. fibers comprising or consisting of a natural material, metallic fibers, i.e. fibers comprising or consisting of a metallic material, synthetic fibers, i.e. fibers comprising or consisting of a synthetic material, and/or combinations of these fiber types. Natural, synthetic and metallic materials are already known to the skilled person in the art and suitable examples are also as defined herein.

Most preferably, the tension element used in the present invention is a synthetic tension element, i.e. the tension element comprises or consists of synthetic materials. Said synthetic tension element preferably comprise or consists of synthetic fibers, preferably in an amount of at least 50 wt%, based on the total weight of the tensile element, more preferably at least 70 wt%, even more preferably at least 90 wt%, most preferably all fibers contained by said synthetic tension element are synthetic fibers. Preferably, the synthetic fibers are "high performance fibers" including fibers comprising a polymer and/or a polymer-based composition, wherein the polymer is selected from a group comprising or consisting of homopolymers and/or copolymers of alpha-olefins, e.g. ethylene and/or propylene; polyoxymethylene; poly(vinylidine fluoride); poly(methylpentene); poly(ethylene-chlorotrifluoroethylene); polyamides and polyaramides, e.g. poly(p-phenylene terephthalamide) (known as Kevlar®); polyarylates; poly(tetrafluoroethylene) (PTFE); poly{2,6-diimidazo-[4,5b-4',5'e]pyridinylene-1,4(2,5-dihydroxy)phenylene} (known as M5); poly(p-phenylene-2, 6-benzobisoxazole) (PBO) (known as Zylon®); poly(hexamethyleneadipamide) (known as nylon 6,6); polybutene; polyesters, e.g. poly(ethylene terephthalate), poly(butylene terephthalate), and poly(1,4 cyclohexylidene dimethylene terephthalate); polyacrylonitriles; polyvinyl alcohols and thermotropic liquid crystal polymers (LCP) as known from e.g. US 4384016 , e.g. Vectran® (copolymers of para hydroxybenzoic acid and para hydroxynaphtalic acid). Also combinations of such polymers can be used in the composition of the fibers in the tension element according to the present invention. Preferably, the polymeric fibers comprise a polyolefin, preferably an alpha-polyolefin, such as propylene homopolymer and/or ethylene homopolymers and/or copolymers comprising propylene and/or ethylene. The average molecular weight (M_{w}) and/or the intrinsic viscosity (IV) of said polymeric materials can be easily selected by the skilled person in order to obtain a fiber having desired mechanical properties, e.g. tensile strength. The technical literature provides further guidance not only to which values for M_{w} or IV a skilled person should use in order to obtain strong fibers, i.e. fibers with a high tensile strength, but also to how to produce such fibers.

Alternatively, high performance fibers may be understood herein to include polymeric fibers having a tenacity or tensile strength of at least 1.2 N/tex, more preferably at least 2.5 N/tex, most preferably at least 3.5 N/tex, yet most preferably at least 4 N/tex. For practical reasons, the tenacity or tensile strength of the high performance fibers may be at most 10 N/tex. The tensile strength may be measured by the method as described in the "Examples" section herein below.

The tensile modulus of the high performance fibers may be of at least 40 GPa, more preferably at least 60 GPa, most preferably at least 80 GPa. The titer of the fibers is preferably at least 100 dtex, even more preferably at least 1000 dtex, yet even more preferably at least 2000 dtex, yet even more preferably at least 3000 dtex, yet even more preferably at least 5000 dtex, yet even more preferably at least 7000 dtex, most preferably at least 10000 dtex.

More preferably, the tension element comprises or consists of a polyolefin, wherein the polyolefin is a polyethylene homopolymer, even more preferably a high performance polyethylene, and most preferably high molecular weight polyethylene (HMWPE) or ultrahigh molecular weight polyethylene (UHMWPE). By UHMWPE is herein understood a polyethylene having an intrinsic viscosity (IV) of at least 4 dl/g, more preferably at least 8 dl/g, most preferably at least 12 dl/g. Preferably said IV is at most 50 dl/g, more preferably at most 35 dl/g, more preferably at most 25 dl/g. Intrinsic viscosity is a measure for molecular weight (also called molar mass) that can more easily be determined than actual molecular weight parameters like Mₙ and M_{w}. The IV may be determined according to ASTM D1601(2004) at 135 °C in decalin, the dissolution time being 16 hours, with BHT (Butylated Hydroxy Toluene) as anti-oxidant in an amount of 2 g/l solution, by extrapolating the viscosity as measured at different concentrations to zero concentration.

By 'UHMWPE fibers' is meant herein fibers comprising ultra-high molar weight polyethylene and having a tenacity of at least 1.5, preferably 2.0, more preferably at least 2.5 or at least 3.0 N/tex. Tensile strength, also simply strength, or tenacity of fibers are determined by known methods as described in the experimental section. There is no reason for an upper limit of tenacity of UHMWPE fibres, but available fibres typically are of tenacity at most about 5 to 6 N/tex. The UHMWPE fibres also have a high tensile modulus, e.g. of at least 75 N/tex, preferably at least 100 or at least 125 N/tex. UHMWPE fibres are typically also referred to as high-modulus polyethylene fibres or high performance polyethylene fibers.

The UHMWPE fibers have preferably a titer of at least 5 dtex, more preferably at least 10 dtex. For practical reasons, the titer of the fibers are at most several thousand dtex, preferably at most 5000 dtex, more preferably at most 3000 dtex. Preferably the titer of the fibers is in the range of 10 to 10000, more preferably 15 to 6000 and most preferably in the range from 20 to 3000 dtex.

The UHMWPE fibres have preferably a filament titer of at least 0.1 dtex, more preferably at least 0.5 dtex, most preferably at least 0.8 dtex. The maximum filament titer is preferably at most 50 dtex, more preferably at most 30 dtex and most preferably at most 20 dtex.

The polymeric fibres may be obtained by various processes, for example by a melt spinning process, a gel spinning process or a solid state powder compaction process.

Preferably, the UHMWPE fibers comprise gel-spun fibers, i.e. fibers manufactured with a gel-spinning process. Examples of gel spinning processes for the manufacturing of UHMWPE fibers are described in numerous publications, including EP 0205960 A, EP 0213208 A1, US 4413110, GB 2042414 A, GB-A-2051667, EP 0200547 B1, EP 0472114 B1, WO 01/73173 A1 and EP 1,699,954. The gel spinning process typically comprises preparing a solution of a polymer of high intrinsic viscosity (e.g. UHMWPE), extruding the solution into fibers at a temperature above the dissolving temperature of the polymer, cooling down the fibers below their gelling temperature, thereby at least partly gelling the fibers, and drawing the fibers before, during and/or after at least partial removal of the solvent. The gel-spun fibers obtained typically contain very low amount of solvent, for instance at most 500 ppm.

The fibre may include also tapes. Tapes are generally known as fibrous or non-fibrous materials. The tapes may be prepared by any method already known in the prior art. The non-fibrous tape can be obtained with a process different than a process comprising a step of producing fibers and a step of using, e.g. fusing, the fibers to make a tape. For instance, the non-fibrous tape may be obtained by feeding a polymeric powder between a combination of endless belts, compression-moulding the polymeric powder at a temperature below the melting point, also referred to as the melting temperature, thereof and rolling the resultant compression-moulded polymer followed by drawing. Such a process is for instance described in EP0733460A2, incorporated herein by reference. Compression moulding may also be carried out by temporarily retaining the polymer powder between the endless belts while conveying them. This may for instance be done by providing pressing platens and/or rollers in connection with the endless belts. Preferably, when UHMWPE is the polymer used in such process, then UHMWPE needs to be drawable in the solid state. The non-fibrous tape obtained is also known as "solid state tape".

Another process for the formation of tapes may be by melt-spinning and comprises feeding a polymer to an extruder, extruding a tape at a temperature above the melting point thereof and drawing the extruded polymeric tape below its melting temperature to obtain a melt-spun polymeric tape. The melt-spun polymeric tape is typically substantially free of any solvent.

The tapes may also be prepared by a gel spinning process, e.g. the tapes comprise gel spun UHMWPE. A suitable gel spinning process is described in for example GB-A-2042414, GB-A-2051667, EP0205960 A and WO01/73173 A1, and in "Advanced Fibre Spinning Technology", Ed. T. Nakajima, Woodhead Publ. Ltd (1994), ISBN 185573 182 7. In short, the gel spinning process comprises preparing a solution of a polymer of high intrinsic viscosity, extruding the solution into a tape at a temperature above the dissolving temperature of the polymer, cooling down the film below the gelling temperature, thereby at least partly gelling the tape, and drawing the tape before, during and/or after at least partial removal of the solvent. The product obtained typically contain some solvent at ppm level, for instance at most 500 ppm.

In the described methods to prepare the tapes, the drawing, preferably uniaxial drawing, of the produced tapes may be carried out by means known in the art. Such means comprise extrusion stretching and tensile stretching on suitable drawing units. To attain increased mechanical strength and stiffness, drawing may be carried out in multiple steps. In case of tapes comprising a polyolefin, preferably a polyethylene and more preferably UHMWPE, drawing is typically carried out uniaxially in a number of drawing steps. The first drawing step may for instance comprise drawing to a stretch factor of 3. In case that the polyolefin is UHMWPE, a multiple drawing process is preferably used where the tapes are stretched with a factor of 9 for drawing temperatures up to 120°C, a stretch factor of 25 for drawing temperatures up to 140°C, and a stretch factor of 50 for drawing temperatures up to and above 150°C. By multiple drawing at increasing temperatures, stretch factors of about 50 and more may be reached.

Preferably, the tapes have a tensile strength of at least 0.3 GPa, more preferably at least 0.5 GPa, even more preferably at least 1 GPa, most preferably at least 1.5 GPa as measured according to the methods in the "Example" section herein below.

The tapes may form a fabric, preferably a woven fabric. By fabric of tapes is herein understood a fabric wherein the tapes are unidirectionally aligned and run along a common direction with their lengths defining and being contained by a single plane. A gap may exist between two adjacent tapes, said gap being preferably at most 10%, more preferably at most 5%, most preferably at most 1% of the width of the narrowest of said two adjacent tapes. Preferably, the tapes are in an abutting relationship. More preferably, the fabric comprises adjacent tapes that overlap each other along their length over part of their surface, preferably the overlapping part being at most 50%, more preferably at most 25%, most preferably at most 10% of the width of the narrowest of said two overlapping adjacent tapes. Preferably, the running common direction of the tapes in a layer is under an angle with the running common direction of the tapes in an adjacent layers, said angle being preferably between 45° and 90°, more preferably about 90°. Very good results are obtained when the tapes form a woven fabric. Preferred woven structures are plain weaves, basket weaves, satin weaves and crow-foot weaves. Most preferred woven structure is a plain weave. Preferably, the thickness of a woven fabric is between 1.5 times and 3 times the thickness of a tape, more preferably about 2 times the thickness of a tape.

The tape layers may be weaved by processes already known in the art. Weaving of tapes is known per se, for instance from document WO2006/075961, which discloses a method for producing a woven layer from tape-like warps and wefts comprising the steps of feeding tape-like warps to aid shed formation and fabric take-up; inserting tape-like weft in the shed formed by said warps; depositing the inserted tape-like weft at the fabric-fell; and taking-up the produced woven monolayer; wherein said step of inserting the tape-like weft involves gripping a weft tape in an essentially flat condition by means of clamping, and pulling it through the shed. The inserted weft tape is preferably cut off from its supply source at a predetermined position before being deposited at the fabric-fell position. When weaving tapes specially designed weaving elements are used. Particularly suitable weaving elements are described in US6450208. Preferably, the woven structure of said monolayers is a plain weave. Preferably, the weft direction in a tape monolayer is under an angle with the weft direction in an adjacent tape monolayer. Preferably said angle is about 90°. The tape monolayers may contain an array of unidirectionally arranged polymeric tapes, i.e. tapes running along a common direction. Preferably, the tapes partially overlap along their length. The common direction of the tapes in a monolayer may be under an angle with the common direction of the tapes in an adjacent monolayer, e.g. said angle is about 90°. The tapes may be subjected to pressure, preferably at a temperature below the melting temperature (Tm) of the polyolefin as determined by DSC, to form a consolidated sheet. When the tapes are arranged into monolayers, preferably the consolidated sheet is obtained by pressing a plurality of the monolayers at increased pressures, preferably at a temperature below Tm. Useful pressures may be pressures of at least 1 bar, preferably at least 10 bar, yet preferably at least 15 bar, more preferably at least 20 bar, yet more preferably at least 40 bar and most preferably at least 50 bar. Preferably, said pressure is at most 100, more preferably at most 165 bar, most preferably at most 200 bar, yet most preferably at most 300 bar. The temperature used is preferably of between 120°C below Tm and Tm, more preferably between 50°C below Tm and 2°C below Tm. Suitable temperatures when UHMWPE tapes are used include between 30°C and 160°C, more preferably between 50°C and 150°C.

The method of the invention may comprise at least one tension element. When there are at least 2 tension elements, these may be kept together by any method known in the art, e.g. by applying a cover around the tension elements. The cover may be made by any material known in the art, preferably by a fabric comprising polymeric fibers. A single tension element can also comprise a cover for protection.

Any tension element known in the art, e.g. strip, belt, cord, ribbon, cable, wire, rope, strand, tube, hose, wire rope, strap, tape, and chain may be used according to the present invention. Such tension elements, their design, composition and the methods of making them are already widely described in the prior art. For instance, a strap or a belt can be made by weaving or knitting a multifilament yarns into any construction known in the art such as a plain and/or a twill weave construction. Chains may include the synthetic chains as described in documents WO2009115249, WO2008089798, WO2014076279 and WO2013186206 incorporated herein by reference.

The tension element may be coated or not coated. Preferably, the tension element is coated. Such a coated tension element shows a life time improvement during prolonged use times.

The tension element and/or the cores of the tension element may be subjected to an additional heat-setting process as already described in the prior art.

A cover may be applied on the surface of the tension element that may protect the tension element from external abrasion. Such a construction is, for instance, known from WO2009130001.

More preferably, the tension element is a rope. Any rope known in the art can be used. The rope may have any composition and design known in the art and may be made by any method known in the art. Preferably, the rope used in the method according to the present invention comprise a plurality of strands, said strands comprising a plurality of yarns containing said fibers. Preferred constructions of ropes include braided ropes and laid ropes. The rope typically comprises fibers and interstices between the fibers that form the rope. Typically, the tightness of the rope also determines the size of the interstices between the fibers forming thereof; the tighter the rope is the smaller the interstices may be. The tightness of the rope may be related for a braided rope to the braiding period (braid factor L/d) and for a laid rope to the twist factor; whereas the smaller said braiding period or the larger said twist factor, the tighter the rope.

Preferably, the rope used in the method according to the invention is a rope especially suited for bending applications, such as bend-over-sheave applications, particularly cyclic bent-over-sheave applications, also known in the art as CBOS. Preferably, the rope according to the invention is a rope having a diameter of at least 5 mm, more preferably at least, yet more preferably, at least 10 mm, at least 40 mm, at least 50 mm, at least 60 mm, or even at least 70 mm. Largest ropes known have diameters up to about 300 mm, ropes used in deep water installations typically have a diameter of up to but not limited to about 130 mm.

The rope can have a cross-section that is about circular or round, but also an oblong cross-section, meaning that the cross-section of a tensioned rope shows a flattened, oval, or even (depending on the number of primary strands) an almost rectangular form. Such oblong cross-section preferably has an aspect ratio, i.e. the ratio of the larger to the smaller diameter (or width to height ratio), in the range of from 1.2 to 4.0. Methods to determine the aspect ratio are known to the skilled person; an example includes measuring the outside dimensions of the rope, while keeping the rope taut, or after tightly winding an adhesive tape around it. The advantage of a non-circular cross section with said aspect ratio is that during cyclic bending where the width direction of the cross section is parallel to the width direction of the pulley, less strain differences occur between the fibers in the rope, and less abrasion and frictional heat occurs, resulting in enhanced bend fatigue life. The cross-section preferably has an aspect ratio of about 1.3 - 3.0, more preferably about 1.4 - 2.0. In case of a rope with an oblong cross-section, it is more accurate to define the size of a round rope by the diameter of a round rope of same mass per length as the non-round rope, sometimes referred in the industry as an effective diameter. In this document the term 'diameter' means an effective diameter in case of a rope with an oblong cross-section.

The rope used according to the invention may comprise a core member around which fibers are braided. The construction with a core member is especially useful when it is desired that the braid does not collapse into an oblong shape and the rope retains its shape during use.

Different types of fibers may be formed into a rope yarn. The fibers are as described herein. The rope yarns are made into strands and the strands are made into the final composite rope.

The rope may further contain thermally or electrical conductive fibers, such as metal fibers, preferably in the core. This is advantageous since the centre of the rope usually has the highest temperature. With this embodiment, the heat generated and otherwise kept in the centre of the rope is dissipated especially fast along the longitudinal direction. For applications where the same part of the rope is repeatedly exposed to bending, this may be especially advantageous.

Each rope yarn may also be made from a first rope yarn made from first fibers and a second rope yarn made from second fibers, and so on. The first, second and optionally further rope yarns are made into strands and the strands are made into the final composite rope. Such ropes are described for instance in document WO2007062803, which is incorporated herein by reference.

Alternatively, each strand of rope is made from a single type of rope yarns. Strands each made from different type of fibers are made into the final composite rope.

Also alternatively, some rope yarns or strands are made from one type of fibers and some rope yarns or strands are made from two or more type of fibers.

The rope according to the invention can be of various constructions, including laid, braided, parallel (with cover), and wire rope-like constructed ropes. The number of strands in the rope may also vary widely, but is generally at least 3 and preferably at most 16, or even at most 100, to arrive at a combination of good performance and ease of manufacture. There is no upper limit of the number of strands in the rope, this depending on practicalities, e.g. on the applications for which the rope is used.

Preferably, the rope according to the invention is of a braided construction, to provide a robust and torque-balanced rope that retains its coherency during use. There is a variety of braid types known, each generally distinguished by the method that forms the rope. Suitable constructions include soutache braids, tubular braids, and flat braids. Tubular or circular braids are the most common braids for rope applications and generally consist of two sets of strands that are intertwined, with different patterns possible. The number of strands in a tubular braid may vary widely. Especially if the number of strands is high, and/or if the strands are relatively thin, the tubular braid may have a hollow core; and the braid may collapse into an oblong shape.

The rope according to the invention can be of a construction wherein the lay length (the length of one turn of a strand in a laid construction) or the braiding period (that is the pitch length related to the width of a braided rope) is not specifically critical. Suitable lay lengths and braiding periods are in the range of from 4 to 20 times the diameter of the rope. A higher lay length or braiding period may result in a more loose rope having higher strength efficiency, but which is less robust and more difficult to splice. Too low a lay length or braiding period would reduce tenacity too much. Preferably therefore, the lay length or braiding period is about 5 - 15 times the diameter of the rope, more preferably 6 -10 times the diameter of the rope.

In the rope according to the invention the construction of the strands, also referred to as primary strands, is not specifically critical. The skilled person can select suitable constructions like laid or braided strands, and twist factor or braiding period respectively, such that a balanced and torque-free rope results.

The secondary strands or rope yarns containing polymer fibers can be of various constructions, depending on the desired rope applications. Suitable constructions include twisted fibers; but also braided ropes or cords, like a circular braid, can be used. Suitable constructions are for example mentioned in US 5901632, which is incorporated herein by reference.

Each primary strand may be itself a braided rope or a laid rope. Preferably, the strands are circular braids made from an even number of secondary strands, also called rope yarns, which comprise polymer fibers. The number of secondary strands is not limited, and may for example range from 6 to 32; with 8, 12 or 16 being preferred in view of available machinery for making such braids. More preferably, the strands are laid ropes, which comprise polymer fibers. The number of secondary strands is not limited, and may for example range from 3 to 6. The skilled man in the art can choose the type of construction and titer of the strands in relation to the desired final construction and size of the rope, based on his knowledge or with help of some calculations or experimentation. Such rope constructions are described in document WO2003102295, which is incorporated herein by reference.

The rope according to the invention can be made with known techniques. The rope is preferably coated. A coating composition comprising cross-linkable silicone polymers may be applied to fibers as described herein and be cured to form a coating comprising a cross-linked silicone polymer, and then the fibers may be made into a rope. The coating composition comprising cross-linkable silicone polymers may also be applied after the rope has been formed. It is of course possible to apply the coating composition on rope yarns assembled from the fibers or on strands assembled from the rope yarns.

Preferably, the rope may be coated with a coating composition. One preferred method of making a coated rope comprising fibers, preferably high strength fibers comprises the steps of applying a coating composition comprising a cross-linkable silicone polymer to the high strength fibers and/or the rope and subjecting the high strength fibers and/or the rope to a temperature of 120-150 °C to form a coating comprising a cross-linked silicone polymer on the rope and/or the HPPE fibers. Such a coated rope is, for instance described in document WO2011015485, which is incorporated herein by reference. Coatings for the rope can be of the same type or different than coating for the fibers. Other coatings for the rope are for instance known under commercial trade name ICO-DYN-10, that is a silicone-based coating.

The rope may alternatively comprise tapes, which tapes may be obtained by a fibrillation process as describe for instance in document WO2013092622, incorporated herein entirely by reference. This document particularly describes step of providing an uniaxially oriented tape comprising ultra-high molecular weight polyethylene, the tape having a tensile strength of at least 0.9 GPa as measured in accordance with ISO 1184(H), and simultaneously twisting and fibrillating the tape into a twisted strand of fibrillated tape with a coherent network of filaments and fibrils.

By "closed cooling system" is herein meant a system comprising a cooling device, a channel located in the pulley and a cooling medium, the cooling device being connected to the channel, forming together a closed circuit suitable for recirculating the cooling medium through the pulley and enabling cooling of the pulley and by this of the tension element. Cooling of the tension element takes place preferably at the contact surface between the tension element and the pulley, or with other words, it preferably takes place at the part of the tension element that is in direct contact with the pulley. Cooling of an object is generally known in the art and referred to herein as subtracting the thermal energy from the object and by this reducing the temperature of the object. The temperature of the cooling medium at the inlet of the cooling device can be at least 0.1°C or at least 1°C higher than the temperature of the cooling medium in the pulley. Said closed cooling system allows internal cooling of the pulley, and thus indirect cooling of the tension element, being beneficial when compared to the known cooling methods, e.g. sub-merged cooling or cooling in an open reservoir by e.g. pouring, spraying water or blowing air on a tension member or merely by exposing the tension element to ambient environment, e.g. in air at about 15-25°C, since the cooling medium used in the present invention is not directly exposed to the environment and to the tension element. The closed cooling system also enables the use of various cooling media for the purpose of cooling also at temperatures below 0°C and allows a more accurate temperature control of the tension member.

Any pulley known in the art, for instance having any design and/or made of any material known in the art, e.g. steel, copper, aluminum, composite, polymer (e.g. casted Nylon, HDPE, UHMWPE) and/or combinations thereof can be used according to the present invention. For instance, pulleys are generally described in documents Steel wire ropes for cranes, Problems and solutions by Roland Verreet, 2001, PR GmbH, Aachen and in document Sheaves and Drums chapter in the Bethlehem Mining Rope®, Technical Bulletin 2, Wirerope Works, Inc. Preferably, the pulley according to the present invention is a sheave.

The pulley according to the present invention may be directly in contact with the cooling device forming a closed cooling system or may be indirectly in contact with the cooling device via a swivel connector forming a closed cooling system.

Any cooling device already known in the art, for instance having any design and/or made of any material known in the art can be used according to the present invention. Suitable examples of such cooling devices include a cryostat, a radiator of a car, air-conditioning system, a refrigerator.

The cooling device preferably comprises an outlet (that also may be referred to herein as feed) by which the cooling medium can be fed to the internal channels of the pulley and an inlet (that also may be referred to herein as return) by which the cooling medium can be fed to the cooling device, the inlet and the outlet forming together with the channels located inside the pulley a closed loop that enables recirculating the cooling medium within the cooling device and the pulley. The inlet of the pulley may be thus referred to herein as the outlet of the cooling device and outlet of the pulley may be referred to herein as the inlet of the cooling device. The front side of the pulley and the back side of the pulley can be connected by internal channels inside the pulley. The connection between said inlet and outlet may be any type of connection known in the art, e.g. hoses and can be made of any known material, e.g. silicone-based material.

In case the pulley is in contact with the closed cooling system via a swivel connector, said inlet and outlet of the cooling device connection, e.g. hoses can be connected to the swivel connector by means of any connectors known in the art, such as fast connectors. Any swivel connector known in the art can be used according to the present invention. Swivel connectors and fast connectors are for instance described in DSTI, Inc. catalog, Lightweight + Compact Rotary Union Solutions - LT series chapter, 2015.

Preferably, the cooling device and the pulley may be connected to the swivel connector in such a way that one side of the swivel connector that connects to the pulley is dynamic, i.e. is able to rotate freely along with a shaft, while the other side of the swivel connector that connects to the cooling device side is static (i.e. does not rotate). Thus, the swivel connector inlet may be static and the swivel connector outlet may be dynamic, with the part of the swivel connector connecting to the pulley rotating together, in the same direction and with the same velocity with the pulley and optionally with the shaft. This construction prevents the loop formed by the inlet-outlet connection, e.g. the hose of the cooling device from tangling and twisting while movements of the pulley.

The shaft that can be connected to the pulley is typically known in the prior art as a body, e.g. a cylindrical shaped body and has typically the role of transferring the tensile load to the structure, e.g. a crane or machine. The shaft can rotate together with the pulley in the same direction and with the same velocity or in a different direction, i.e. the opposite direction when the pulley comprises internal bearings. Any shaft known in the art can be used according to the present invention, for instance having any design and/or made of any material known in the art.

Preferably, the cooling medium is fed from the cooling device into the pulley via the inlet of the pulley through internal channels located underneath the groove surface of the pulley. Said feeding may be carried out by any means known to the skilled person in the art, e.g. by pumping the cooling media by an electrical pump. The internal channels may be milled or machined in the pulley by any method known in the art. Such construction enables the cooling medium to extract the heat from the groove surface of the pulley and thus to lower the temperature of the pulley.

There may be alternatively a plate connected (e.g. bolted) to the pulley, the plate having internal channels via which the cooling media is in indirect contact with the pulley, i.e. via the plate, enabling cooling of the pulley and the tension element. The internal channels may be machined or milled inside the plate by any known method in the art. In case a plate is present, the pulley may contain or may not contain internal channels.

The pulley may further comprise on both sides a plate, e.g. having the shape of a disc. The plate may be made of any material, e.g. stainless steel and by any method and design known in the art. The plates may be also referred herein to as front and back cover plates for sealing the cooling medium and may comprise a rubber-type of seal.

Alternatively, cooling of the pulley can be obtained by installing heat conductive tubes on the outer surface of the pulley (e.g. in a spiral shape on one or both sides), allowing heat to be transferred from the pulley to the tubes and consequently the cooling media may be pumped through the tubes.

Cooling media are generally known in the art and also referred to herein as a substance used in a device to prevent its overheating, transferring the heat produced by the device to other devices that use or dissipate it. The cooling medium according to the present invention may include any fluid, e.g. gas, liquid, liquefied gas and/or solid known in the art as cooling media. Preferably, the cooling media is a fluid, more preferably a liquid. Suitable examples of cooling media include water, air, hydrogen, inert gas, steam, polyalkylene glycol, ethylene glycol, oils, e.g. mineral oils, silicone oils, transformer oils, fluorocarbon oils, freons, refrigerants, e.g. halomethane, haloalkanes, e.g. liquefied propane, carbon dioxide, liquid nitrogen, liquid hydrogen, nanofluids, dry ice, water ice. Preferably, the cooling medium is water. The temperature of the cooling medium may be, for instance, in a range of from - 60 to 200°C. The flow rate of the cooling media is, for instance, 0.01 to 20 l/min when a cryostat is used as cooling device.

The temperature difference between the pulley and the tension element at contact surface with the pulley can be at least 0.1°C and at most 200°C, more preferably in a range of from 0.1°C to 50°C. The temperature of the tension element may also further depend on e.g. the design, material choice, and heat transfer between pulley and tension element and/or on the heat conductivity of the tension element. The pulley has preferably about the same temperature as the cooling media, the temperature of the pulley further depending on e.g. the design, material choice, heat conductivity value of the pulley.

There may be a temperature difference between the surface of the tension element at contact surface with the pulley and the core of the tension element, said difference temperature may be in a range of from 0.1°C to 50°C, preferably in the range of from 1 to 10°C. There may also be a difference temperature between the cooling medium and the surface of the tension element at contact surface with the pulley, said difference temperature may be in a range of from 0.1°C to 50°C, preferably in the range of from 1 to 10°C. The core temperature of the tension element is defined herein as the temperature measured at the center location of the cross-section of the tension element, at contact surface of the tension element with the pulley. The core temperature of the tension element is typically higher than the temperature of the tension element at contact surface of the tension element with the pulley but may not exceed the temperature limit suitable for proper function of the tension element.

The temperature of the pulley may be controlled by the type of the cooling media, by controlling the temperature of the cooling media at the inlet of the pulley and/or by controlling the flow rate of the cooling media, by the size of the contact surface of the cooling media on the pulley and/or by using devices known already in the art for controlling temperature, such as a thermocouple. The flow rate of the cooling media may depend on the amount of heat desired to be extracted from the tension element and on the load levels applied on the tension element. For instance, when the outlet temperature from the pulley should be lower, the flow rate should be also increased. Higher flow rates provide more effective cooling of the pulley and thus of the tension element. The device for monitoring the temperature, e.g. the thermocouple may be attached to the cooling device, e.g. the cryostat by known means in the art and at any place where cooling medium flows.

When the tension element comprises high performance polymers, in particular when the tension element comprises fibers comprising UHMWPE, the core temperature of the rope at contact surface of the tension element and the pulley may not be higher than 100°C, preferably the core temperature may not be higher than 70°C and more preferably the core temperature may not be higher than 50°C. There also may be a temperature difference between the surface of the tension element at the contact surface with the pulley and the core of the tension element, said temperature difference may be in a range of from 0°C to 20°C. There may also be a temperature difference between the cooling medium and the surface of the tension element at the contact surface of the tension element with the pulley, said temperature difference may be in a range of from 0°C to 50°C. Preferably, the temperature of the pulley is about the same, more preferably equal to the temperature of the the cooling media. The temperature of the tension element at the contact surface with the pulley is preferably depending on the temperature of the pulley.

The present invention also relates to a closed cooling system for a tension element, the system comprising a cooling device, a channel located in a pulley and a cooling medium, the cooling device being connected to the channel, forming together a closed circuit suitable for recirculating the cooling medium through the pulley. The closed cooling system, its composition and construction is as described already herein. By using such a closed cooling system, it was observed that the life time of the tension element when used in bending applications during prolonged times is improved.

The present invention also relates to a tension element, preferably to a cooled tension element, the tension element being obtainable by the method according to the present invention, the method of bending a tension element over the pulley, the method comprising the step of decreasing the temperature of the pulley by using the closed cooling system that is in contact with the pulley. The tension element obtainable by said method has a bending cycles to failure value of higher than 100%, preferably higher than 150%, more preferably higher than 200 %, as measured by the CBOS method as described in the Examples section of this patent application. In particular, according to this method, the tension element was placed under a load and subjected to bending cycle frequencies (i.e. the tension element was cycled back and forward over the pulley), until the tension element reached failure. In this method, D/d ratio (i.e. diameter of the pulley divided by the diameter of the tension element) may be between 5 and 100, the load at which the tension element is subjected may be between 1 and 50% of the breaking strength of the tension element and the bending cycle frequencies may be between 1 and 15 bending cycles per minute. A lower D/d, a higher cycle frequency and/or a higher load may result in an increased temperature of the tension element. Each machine cycle typically produced two straight-bent-straight bending cycles i.e. the double bend zone of the exposed tension element section.

Furthermore, the present invention relates to the use of the tension element of construction and composition as detailed in this application as a load-bearing element in bending applications, for example bend-over-sheave applications, such as lifting and hoisting applications. The tension element is particularly suited for use in applications where a fixed part or parts of the tension element is repeatedly bent over a prolonged period of time. Examples include applications for subsea installations, mining, renewable energy, cranes, robotics, transport systems, mooring and so on.

Also, the present invention relates to the uses of the tension element and/or of the closed cooling system of construction and composition as detailed in this application, in lifting and hoisting, preferably for cranes, marine platforms, robotics, mining, deep-sea-installation and recovery, transportation.

The present invention may also refer to a method of bending a tension element over a pulley, comprising a step of increasing the temperature of the pulley by using a closed heating system that is in contact with the pulley. This enables increasing the temperature of the pulley and by this of the tension element. In sub-zero ambient temperatures, the coating performance of the tension element and particularly, lubrication can be improved by applying said method of bending of the tension element. For instance, in case of a rope comprising nylon, this method prevents brittleness of the rope as the temperature of the rope does not go below glass transition temperature. The construction and composition of the pulley and of the tension element is as described herein above. The construction and composition of the closed heating system is as described herein above for the closed cooling system, with the difference that instead of decrease of temperature, there is increase of temperature.

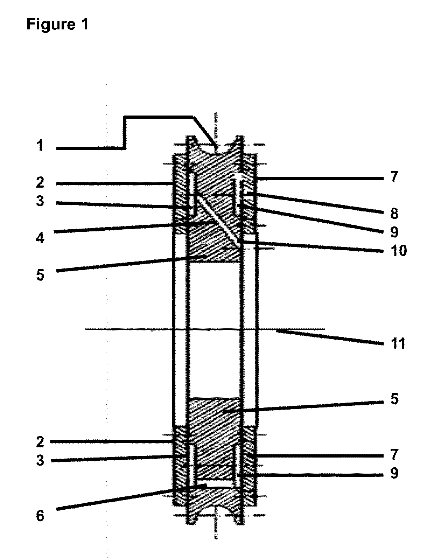

Figure 1 herein schematically illustrates the side view cross section of a sheave used according to the present invention, wherein: 1 = groove of the sheave; 2 = back disc for covering the sheave for sealing the cooling medium; 3 = internal channel located at back side of the sheave; 4 = internal channel connecting inlet and back side of the sheave; 5 = sheave; 6 = internal channels connecting front side and back side of the sheave; 7 = front disc for covering the sheave for sealing the cooling medium; 8 = cooling media outlet; 9 = internal channel located at front side of the sheave; 10 = cooling medium inlet; 11 = symmetry axis.

### Examples

### METHODS

- Dtex: yarn's or filament's titer was measured by weighing 100 meters of yarn or filament, respectively. The dtex of the yarn or filament was calculated by dividing the weight (expressed in milligrams) to 10.
- Heat of fusion and peak melting temperature have been measured according to standard DSC methods ASTM E 794 and ASTM E 793 respectively at a heating rate of 10K/min for the second heating curve and performed under nitrogen on a dehydrated sample.
- IV: the Intrinsic Viscosity is determined according to method ASTM D1601(2004) at 135°C in decalin, the dissolution time being 16 hours, with BHT (Butylated Hydroxy Toluene) as anti-oxidant in an amount of 2 g/l solution, by extrapolating the viscosity as measured at different concentrations to zero concentration.
- Tensile properties of UHMWPE fibers: tensile strength (or strength) and tensile modulus (or modulus) are defined and determined on multifilament yarns as specified in ASTM D885M, using a nominal gauge length of the fibre of 500 mm, a crosshead speed of 50 %/min and Instron 2714 clamps, of type "Fibre Grip D5618C". On the basis of the measured stress-strain curve the modulus is determined as the difference between 0.3 and 1 % strain. For calculation of the modulus and strength, the tensile forces measured are divided by the titer, as determined above; values in GPa are calculated assuming a density of 0.97 g/cm³ for the UHMWPE.
- Tensile properties of fibers having a tape-like shape: tensile strength, tensile modulus and elongation at break are defined and determined at 25°C on tapes of a width of 2 mm as specified in ASTM D882, using a nominal gauge length of the tape of 440 mm, a crosshead speed of 50 mm/min.
- Number of olefinic branches per thousand carbon atoms was determined by FTIR on a 2 mm thick compression moulded film by quantifying the absorption at 1375 cm-1 using a calibration curve based on NMR measurements as in e.g. EP 0 269 151 (in particular pg. 4 thereof).
- Breaking strength of the tension element was measured according to method ISO2307. For the rope comprising UHMWPE used in the examples, the spliced breaking strength was 400 kN, measured according to ISO2307.
- Cyclic bend-over-sheave (CBOS) test: the bend fatigue of the rope was tested by bending the rope over a sheave. The rope was placed under load and cycled back and forward over the sheave, at a stroke speed of 210 m/min, until the rope reached failure. Each machine cycle produced two straight-bent-straight bending cycles of the exposed rope section, the double bend zone. The force applied to the rope was 30% of the average breaking strength of the tested rope. The ratio D/d was 20, wherein D is the diameter of the sheave and d is the diameter of the rope. The test-load was 24 metric tons for the machine. The test-load was 12 metric tons for the load in the rope applied during testing. The double bend zone was 14 times the diameter of the rope. The bending cycle time was 12 seconds. The pause was 1 second between each cycle reversal. The total machine cycle time was 14 s. The pre-load for bedding in the rope was 5 times 14.5 metric tons.

### Sample 1

A rope having an essentially circular cross-section with an effective diameter of about 21 mm was braided from 12 principal strands, each principal strand containing 7 laid secondary strands, each secondary strand containing a bundle of 15 yarns having 1880 dtex and comprising UHMWPE fibers. The yarns were sold by DSM Dyneema, NL, under the commercial name of Dyneema ® DM20 XBO. The primary strands were braided with a braiding period of 150 mm. The secondary strands were twisted to form a primary strand with a twist factor of 15 twists per m. The yarns were twisted to form a secondary strand with a twist of 13 twists per m. The rope was unwound from a coil and pulled through a tank containing a rope coating commercially available under the name ICO-DYN 10. The coating was diluted before application on the rope with water (in ratio of 1:1) in order to obtain the proper amount of coating weight on the rope (12% dry coat weight), after which the rope was dried by air.

The rope was configured in an endless loop construction, meaning both rope ends have been connected with use of a splice termination. The loop had a circumference of about 6.5 m. The splice termination (often referred also to as a tucked splice) had an amount of tucks of 9 per rope side. Both splice-ends were not tapered.

### Example 1

A sheave of 420 mm in diameter made of a steel type known as RVS 303 was connected by means of a Ring Feder conical coupling to the lower shaft of a cyclic bend-over-sheave fatigue test apparatus. The feed and return channels in the sheave were connected to a swivel connector (manufactured by DSTI) by using a pair of silicon hoses, each end of both hoses being fixed with hose clamps to either the sheave inlet and swivel outlet and vice versa. The swivel connector was then coupled to both the inlet and outlet hoses of a closed cooling system by using a snap tight quick release coupling at the end of each hose. The closed cooling system was connected to the swivel connector such that one side of the swivel connector that connected to the sheave was dynamic, i.e. was able to rotate freely along with a shaft, while the other side of the swivel connector that connected to the cryostat side was static (i.e. does not rotate). Thus, the swivel inlet was static and the swivel outlet was dynamic, rotating together, in the same direction and with the same velocity with the sheave and the shaft. The closed cooling system contained a cryostat as being the cooling device, the cryostat and the internal channels of the sheave forming together a closed circuit suitable for recirculating tap water used as the cooling medium through the sheave and enabling cooling of the sheave and consecutively of the rope.

A Lauda Cryostat TT-19 of type Ultra Kryomat RUK50 was used. The cryostat had an outlet (or feed) by which tap water having a temperature of 5°C was fed to the sheave with a flow rate of about 15 l/min and an inlet (or return) by which water was fed (or returned) to the cryostat with a flow rate of about 15 l/min and temperature of more than 5°C. The cryostat set temperature for cooling the bending sheave was set and maintained at about 5°C.

The water was fed via the inlet of the sheave (i.e. by pumping it using an electrical pump) with a flow rate of about 15 l/min and at a temperature of about 5°C from the cryostat directly into the sheave through internal channels milled underneath the groove surface of the sheave. At both sides (front and back side) of the bending sheave, two stainless steel plates having disc shape were mounted for reasons of sealing the sheave. Both plates manufactured by RVS 303 were provided with a rubber seal for water sealing purposes.

The temperature of the sheave was measured by using a type K thermocouple taped to the side (at groove end) of the sheave and the temperature of the circulated water at the outlet of the cryostat (i.e. the feed of the sheave) was controlled/maintained at the chosen set temperature of about 5°C. For means of reproducibility, the flow rate was kept constant, at about 15 l/min.

During the experiments, the rope center temperature, i.e. the center of the double bending zone (i.e. the core temperature) was continuously monitored and logged. For this, a type K parallel thermocouple has been inserted in the center of the rope at the double bending zone. The thermocouple was, together with the thermocouple used to measure the sheave temperature, connected to a Picotech TC-08 data logger device that was connected to a computer via an USB connection and the live temperature being displayed and logging initiated or configured.

The bend fatigue of the rope was tested by bending the rope over the sheave according to the CBOS test conditions as detailed herein above. The temperature in the single bend zone of the rope at contact surface of the rope with the sheave was about 10 °C less than the temperatures in the double bend zone. The temperature difference between the sheave and the double bend zone of the rope at contact surface of the rope with the sheave before cooling was 17 °C. After the water cooling was initiated (by tap water circulation in the sheave), the temperature difference between the sheave and the double bend zone of the rope remained the same, however the absolute temperature level of both dropped around 26°C. The core temperature of the rope in the double bend zone at contact surface with the sheave before cooling stabilized at about 58°C, and after the water cooling was initiated the temperature decreased rapidly to about 33°C in less than 1000 s. The sheave temperature measured on the sheave near the groove in which the rope is fitted before cooling stabilized at about 40°C°C, and after the water cooling was initiated the temperature decreased rapidly to about 16°C in less than 10 min. The rope failed after 26064 bending cycles. The bending cycles to failure was 211%.

### Comparative Experiment 1

A sheave of 420 mm in diameter machined out of a steel type known as RVS 303 was connected by means of a Ring Feder conical coupling to the lower shaft of a cyclic bending over sheave fatigue test apparatus. The bend fatigue of the rope obtained as Sample 1 was tested by bending the rope over the sheave according to the CBOS test conditions as detailed herein above. The rope and/or the sheave were not actively cooled but there was a cooling effect given by exposing the rope over the sheave into the air at ambient temperature (about 23°C). The temperature in the single bend zone of the rope at contact surface with the pulley was 10°C less than the temperatures in the double bend zone of the rope. The temperature difference between the sheave and the double bend zone of the rope at the contact surface with the sheave was 17°C, remaining thus the same as in Example 1, however the absolute temperature level of the sheave and the double bend zone of the rope was significantly higher than their temperature as described in Example 1. The core temperature of the rope in the double bend zone at contact surface with the sheave during the test at air exposure was about 58°C. The rope failed after 12368 bending cycles. The bending cycles to failure was 100%.

It can be thus observed that a tension element with increased life time (i.e. double value of the resulting bending cycles to failure) when subjected to bending under high load and high frequency cycles of bending during prolonged times was achieved according to the present invention.

## Claims

1. A method of bending a tension element over a pulley, the method comprising a step of decreasing the temperature of the pulley by using a closed cooling system that is in contact with the pulley.

2. The method according to claim 1, wherein the tension element is a strip, a strap, a belt, a cord, a ribbon, a cable, a wire, a rope, a strand, a tube, a hose, a wire rope, a tape, a chain and/or combinations thereof, and preferably the tension element is a rope.

3. The method according to any of the preceding claims, wherein the tension element comprises a material selected from a group comprising a natural material, a metallic material, a synthetic material and/or combinations thereof.

4. The method according to any of the preceding claims, wherein the tension element comprises fibers, preferably high performance fibers, more preferably ultrahigh molecular weight polyethylene fibers.

5. The method according to any of the preceding claims, wherein the pulley is a wheel, a sheave, gliding shoe, bitts or a drum, and preferably the pulley is a sheave.

6. The method according to any of the preceding claims, wherein the closed cooling system comprises a cooling device, a channel located inside the pulley and a cooling medium, the cooling device being connected to the channel, forming together a closed circuit suitable for recirculating the cooling medium through the pulley.

7. The method according to any of the preceding claims, wherein the cooling device comprises an outlet by which the cooling medium is fed to the channel and an inlet by which the cooling medium is fed into the cooling device, the inlet and the outlet forming together with the channel located inside the pulley a closed loop.

8. The method according to any of the preceding claims, wherein the pulley is connected with the closed cooling system via a swivel connector.

9. The method according to any of the preceding claims, wherein the swivel connector inlet part is static and the swivel connector outlet part is dynamic.

10. The method according to any of the preceding claims, wherein the cooling medium is fed from the cooling device into the pulley via the inlet of the pulley through an internal channel located underneath the groove surface of the pulley.

11. A tension element obtainable by the method according to any of the preceding claims, wherein the bending cycles to failure value of the tension element is higher than 100% as measured by the cyclic bend-over-sheave method.

12. A closed cooling system for a tension element, said system comprising a cooling device, a channel located inside a pulley and a cooling medium, the cooling device being connected to the channel, forming together a closed circuit suitable for recirculating the cooling medium through the pulley.

13. Use of the tension element according to Claim 11 and/or of the closed cooling system according to Claim 12 for lifting and hoisting, preferably for cranes, marine platforms, robotics, mining, deep-sea-installation and recovery, transportation.
